# EUROPEAN PATENT SPECIFICATION

(11) **EP 2 674 005 B1**
(45) Date of publication and mention of the grant of the patent: **11.05.2016**
(21) Application number: 11704760.5
(22) Date of filing: 11.02.2011
(51) Int. Cl.: H04W 72/12

(54) **SIGNALLING A MUTING PATTERN TO A USER EQUIPMENT FOR TIME DOMAIN ENHANCED INTER-CELL INTERFERENCE COORDINATION**
SIGNALISIERUNG EINES STUMMSCHALTMUSTERS AUF EINEM BENUTZERGERÄT ZUR ZEITBEREICHSVERSTÄRKTEN INTERFERENZKOORDINATION ZWISCHEN ZELLEN
SIGNALISATION D'UN MODÈLE SILENCIEUX À UN ÉQUIPEMENT D'UTILISATEUR POUR UNE COORDINATION AMÉLIORÉE DES INTERFÉRENCES INTERCELLULAIRES DU DOMAINE TEMPOREL

(43) Date of publication of application: 18.12.2013
(73) Proprietor: Nokia Solutions and Networks Oy, 02610 Espoo (FI)
(72) Inventor: TIIROLA, Esa Tapani, FI-90450 Kempele (FI); HOOLI, Kari Juhani, FI-90540 Oulu (FI); HULKKONEN, Jari Yrjana, FI-90630 Oulu (FI); PAJUKOSKI, Kari Pekka, FI-90240 Oulu (FI)
(74) Representative: Nokia Corporation
(86) International application number: PCT/EP2011/052060
(87) International publication number: WO 2012/107106

(56) References cited:
- WO-A1-2010/105693
- US-A1- 2010 142 467
- NOKIA SIEMENS NETWORKS ET AL: "RRC Impact of eICIC", 3GPP DRAFT; R2-105467, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2rrc, no. Xi'an; 20101011, 5 October 2010 (2010-10-05), XP050452613, [retrieved on 2010-10-05]
- CATT: "Evaluation of R8/9 Techniques and Enhancements for PUCCH Interference Coordination in Macro-Pico", 3GPP DRAFT; R1-104349, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449706, [retrieved on 2010-08-17]
- 3GPP: "3rd Generation Partnership Project; Technical Specification Group Radio Access Network; Evolved Universal Terrestrial Radio Access (E-UTRA); Multiplexing and channel coding (Release 10)", 3GPP DRAFT; DRAFT36212-A00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, 20 December 2010 (2010-12-20), XP050487460, [retrieved on 2010-12-20]

## Description

### FIELD OF THE INVENTION

The present invention relates to wireless communications net-works, and more particularly to controlling of radio resource usage.

### BACKGROUND ART

Many network operators are evaluating the potential for deploying LTE or UMTS in a GSM band. LTE may be deployed in small spectrum bands and it enables good deployment scalability. With an improved spectrum efficiency, LTE deployment in the GSM band enables bringing higher capacity benefit and also provide operators the ability to deploy an LTE network with a greater coverage at a reduced cost compared to higher frequency spectrum.

US 2010/142467 A1 discloses a method of PUCCH blanking to solve a problem of high emissions towards a band neighbouring an LTE band. In US 2010/192467 A1, the PUCCH region is over-dimensioned so that the outer most resources may be muted resulting in a wider guard band.
WO 2010/105693 A1 discloses a method of PUCCH partitioning to solve a problem of co-interference between co-existing base stations. In WO 2010/105693 A1, the PUCCH regions in the co-existing base stations are dimensioned so that they do not overlap.
In both of the above references, the PUCCH blanking or PUCCH partitioning is achieved by a change to the PUCCH configuration parameters by higher layer signalling.

Various aspects of the invention comprise a method, system, apparatus, user equipment, and computer-readable storage medium as defined in the independent claims. Further embodiments of the invention are disclosed in the dependent claims. According tc an embodiment of the invention there is provided method of controlling muting of higher layer configured up-link signals comprising performing, the method steps of defining, in a network apparatus, a muting pattern regarding uplink signals that are to be temporarily muted, said uplink signals comprising higher layer configured uplink signals; signaling at least a part of the defined mating pattern from the network apparatus to at least one user equipment in order to control the at least one user equipment to mute said uplink signals according to the signalled pattern; and triggering muting based on a specific muting physical downlink control channel including a cell-specific, user equipment specific or user equipment group specific identifier.
According to a further embodiment of the invention there is provided a network apparatus for controlling muting of higher layer configured uplink signals, the apparatus configured to define a muting pattern regarding uplink signals that are to be temporarily muted, said uplink signals comprising higher layer configured uplink signals; signal at least a part of the defined muting pattern to at least one user equipment in order to control the at least one user equipment to mute said uplink signals according to the signalled pattern; and trigger muting based on a specific muting physical downlink control channel including a cell-specific, user equipment specific or user equipment group specific identifier.
According to a yet further embodiment of the invention there is provided a user equipment for muting of higher layer configured uplink signals, the user equipment configured to receive, from a network apparatus, at least a part of a muting pattern regarding uplink signals that are to be temporarily muted, said uplink signals comprising higher layer configured uplink signals; receive, from a network apparatus, a specific muting physical downlink control channel including a cell-specific, user equipment specific or user equipment group specific identifier; and mute higher layer configured uplink signals According to the specific meting physical downlink control channel and the pattern received from the network apparatus.
According to a yet further embodiment of the invention there is provided a communications system comprising an apparatus for controlling muting of higher layer configured uplink signals and at least one user equipment, the system configured to define, in the apparatus, a muting pattern regarding uplink signals that are to be temporarily muted, said uplink signals comprising higher layer configured uplink signals; signal at least a part of the defined muting pattern from the apparatus to the at least one user equipment in order to control the at least one user equipment to mute said uplink signals according to the signalled pattern; and trigger muting based on a specific muting physical downlink control channel including a cell-specific, user equipment specific or user equipment group specific identifier.
According to a yet further embodiment of the invention there is provided a computer-readable storage medium embodying a program of instructions executable by a processor to perform actions directed toward muting of higher layer configured up-link signals, the actions comprising defining, in a network apparatus, a muting pattern regarding uplink signals that are to be temporarily muted, said uplink signals comprising higher layer configured uplink signals; signaling at least a part of the defined muting pattern from the network apparatus to at least one user equipment in order to control the at least one user equipment to mute said uplink signals according to the signalled pattern; and triggering muting based on a specific muting physical downlink control channel including a cell-specific, user equipment specific or user equipment group specific identifier.

### BRIEF DESCRIPTION OF THE DRAWINGS

In the following the invention will be described in greater detail by means of exemplary embodiments with reference to the attached drawings, in which
Figure 1 illustrates refarming of a GSM band according to an exemplary embodiments ;
Figure 2 illustrates scheduled muting with a fixed timing relationship according to an exemplary embodiment;
Figure 3 illustrates scheduled muting with a flexible timing relationship according to an exemplary embodiment;
Figure 4 shows a simplified block diagram illustrating exemplary system architecture;
Figure 5 shows a simplified block diagram illustrating exemplary apparatuses;
Figure 6 shows a messaging diagram illustrating an exemplary messaging event according to an exemplary embodiment;
Figure 7 shows a schematic diagram of a flow chart according to an exemplary embodiment;
Figure 8 shows a schematic diagram of a flow chart according to another exemplary embodiment.

### DETAILED DESCRIPTION OF SOME EMBODIMENTS

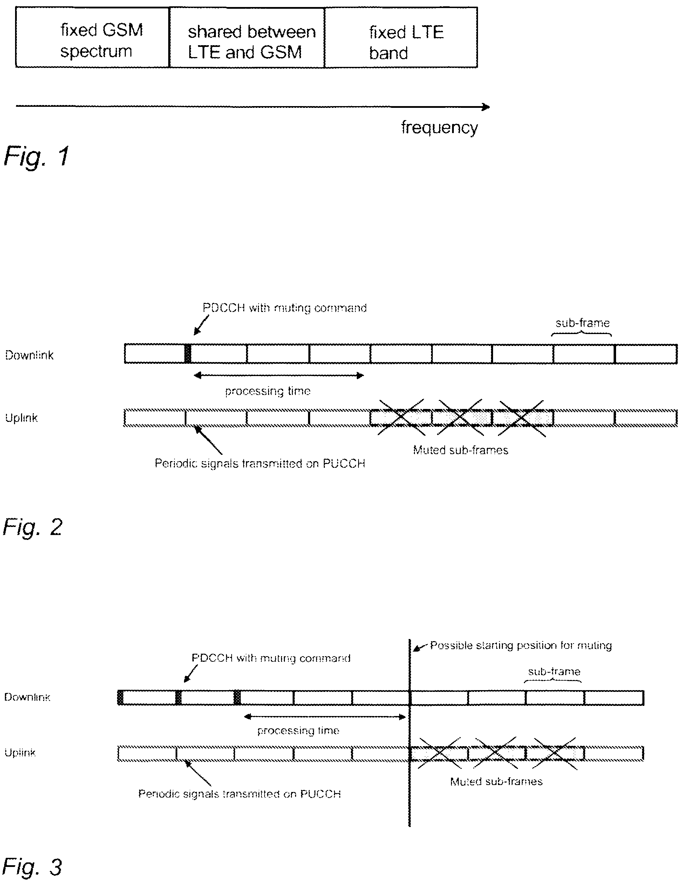

Sufficient degree of flexibility is a requirement for modern communications networks. There are various use cases which require increased flexibility. These use cases include, among others, enhanced inter-cell interference coordination (eICIC), co-existence of different radio systems, providing measurement gaps for network devices (e.g. eNB, UE, relays nodes) and room for secondary communication and providing standardized solution to avoid problems due to in-device co-existence of different radio solutions.
Refarming of radio resources refers to reassigning government-regulated electromagnetic spectrum e.g. for communication with a higher value. Users of the existing radio spectrum (e.g. GSM) are forced out, although they may be compensated in some manner. Refarmed frequency bands may be assigned e.g. to communication (e.g. LTE) that enable a greater economic or social benefit.
An exemplary embodiment relates to the evolution of LTE Release 10 (aka LTE advanced) towards more cognitive spectrum usage. More specifically, an enhanced muting functionality for LTE uplink (UL) signals is provided. This kind of functionality is able to provide a time-domain eICIC (enhanced inter-cell interference coordination) for HetNet (heterogenecus network), and co-existence and deployment cases when refarming the GSM band with LTE. Necessary gaps for eNB/UE measurements and/or secondary communication as well as a standardized solution to avoid problems due to in-device co-existence (LTE vs. ISM/GPS radios), may be provided. Regarding the time-domain eICIC for HetNet, LTE Rel-1C will include support for enhanced ICIC operation for heterogeneous networks (i.e. macro-femto, macro-pico). As an outcome of RAN1#62, it has been agreed to extend Rel 8/9 backhaul-based ICIC to also include a time domain component. Basically this means that coordination of almost blank sub-frames (if MBSFN is configured almost blank sub-frame does not contain CRS in the downlink data region) as well as restricting RRM/CSI measurements at the UE side is supported for a macro-pico environment.
Regarding cc-existence and deployment cases when LTE and GSM operate in a same band, there have been presented use cases for reconfigurable radio systems where a new radio access technology (RAT) is progressively introduced in a frequency band of a previous technology RAT. In Figure 1, a use case is considered where a GSM band is refarmed with LTE. There are fixed spectrum allocations for both systems as well as a shared spectrum, which may be used by both systems. In an exemplary mode of operation, dynamic switching between the GSM mode and the LTE mode is supported in such a way that GSM is the primary system. LTE is allowed to operate on the shared spectrum only when its interference towards the GSM system is low enough.
An example cf a channel that may require special attention in this scenario is GSM SACCH (slow associated control channel). GSM AMR voice codec is more robust than SACCH, which means that SACCH is limiting GSM voice capacity (radio link timeout mechanism drops the call when SACCH is not correctly received). Therefore, the LTE interference towards GSM SACCH is a limiting factor in the above described o-existence deployment case. Following parameters describe SACCH in time do main:
for a single user SACCH burst - 0,577 ms each 120 ms at a cell level SACCH TDMA frame = 4,615 ms each 120 ms

An eNB scheduler has full flexibility to make uplink free from most of the UL signals just by not scheduling any PUSCH or PDSCH, causing HARQ ACK/NACK feedback on predetermined UL sub-frames. However, dynamic scheduling is not able to temporarily mute those UL signals that are not scheduled in a dynamic manner (i.e. periodic signals, semi**-**statically configured signals). These signals may include: PUCCH format 1 (i.e. scheduling request) signals, persistent PUCCH format 1a/1b (i.e. persistent ACK/NACK) signals, persistent PUSCH signals, PUCCH format 2/2a/2b (periodic CQI reporting) signals, sounding reference signal signals, and/or PRACH signals. A common nominator for these signals is that they are configured by using RRC signalling and/or part of system information (MIB/SIBs).
Usage of higher layer signalling may be the only way to mute the listed UL signals. In a higher layer configuration, however, switching certain UL sub-frame off causes considerable amount of RRC signalling. Furthermore, from a delay perspective, the usage of higher layer signalling is not an acceptable solution.
In an exemplary embodiment, a method and an apparatus is provided for temporarily muting predefined UL signals (e.g. PUCCH format 1 signal, persistent ACK/NACK signal using a PUCCH format 1a/1b signal, PUCCH format 2/2a/2b signal, sounding reference signal, PRACH signal, persistent PUSCH signal) which are configured via higher layers and are out-side of the dynamic control of the eNB scheduler. Thus, in an exemplary embodiments, a method and an apparatus is provided for temporarily muting predefined UL signals which are configured via higher layers and are outside of the dynamic control of an eNB scheduler. The solution may comprise three steps: defining a muting pattern, signalling the muting pattern or a part of the muting pattern from eNB to UE(s), and muting pre-defined UL signals.
An exemplary embodiment, a mating pattern is defined for signals to be temporarily muted. The muting pattern depends on the scenaric (e.g. GSM refarming, eICIC). The muting pattern may be UE-specific (e.g. in-device coexistence), cell-specific (e.g. GSM refarming), network-specific (e.g. eICIC), and/or specific to a group of UEs. Muting resolution may vary depending on the application (symbol, slot, sub-frame, multiple sub-frames, half of radio frame, radio frame, etc.). Information related to the muting pattern may, if needed, be conveyed from cne network node to another network node. A network element may be in charge of the defining of the muting pattern for multiple cells in these cases. The muting pattern (especially network-specific) may be coordinated among multiple cells in a certain geographical area. Coordination may be realized via standardized signalling (e.g. via X2 or OTAC) between different network nodes or via a non-standardized O&M. The muting pattern may be common for multiple cells corresponding to the same network layer (e.g. pico/femto layer).
The muting pattern or a part of the muting pattern is signalled from the network node (e.g. eNB) to one or more user equipment in the serving cell. This may involve e.g. schedaled muting, muting based on higher layer configuration signalling, and/or muting based on system information. It should be noted that defining the signals to be muted and signalling this information from the network node to UE may also be needed in certain use cases (it could be seen as a natural part of this step).
Higher layer configured uplink signals are muted at the UE side according to the signalled muting pattern received from the network node. The muting may correspond to dropping the higher-layer configured transmission according to the signalled muting pattern. The muting may also correspond to reducing transmission power for the higher-layer configured transmission according to the signalled muting pattern and according to a predefined transmission power offset. The muting may also be realized in a frequency selective manner, e.g. such that the muting is restricted on a certain frequency portion of the system bandwidth (e.g. band edges), or the muting may follow a frequency hopping pattern. The frequency hopping pattern may correspond to a frequency hopping pattern used in another RAN, e.g. in a GSM system.
The muting pattern may also be understood to refer to patterns in respect to various dimensions. For example, the muting pattern may be understood to be a pattern in respect to signals (or physical channels), frequencies (or physical resource blocks), and/or sub-frames to be muted.
An exemplary embodiment for signalling the muting pattern from the network node (eNB) to the UEs in the serving cell may involve scheduled muting. It may be based on dynamic uplink disabling signalling transmitted using PDCCH. The solution is illustrated in Figure 2 (scheduled muting with fixed timing relationship) and Figure 3 (scheduled muting with flexible timing relationship). It may be based on the following elements.
1) Triggering of scheduled muting is based on a special "muting PDCCH" including a cell-specific (or UE-specific, or UE group specific) identifier. The identifier, such as RNTI, may be included in PDCCH e.g. by masking for CRC. The identifier indicates that the corresponding PDCCH includes information related to muting. The identifier may be signalled to UE e.g. via higher layer signalling or as a part of system information. In order to maximize the coverage area of the muting PDCCH without increasing the number of PDCCH blind decoding at UE, it makes sense to utilize one of the smallest PDCCH payload size options, for example, a DCI format 1C (and/or 0/1A) matching the size of the "muting PDCCH" with other DCI formats may be considered as well, for the "muting PDCCH".
2) The actual muting pattern (including the duration of the muting) may be defined via higher layer signalling (either dedicated RRC signalling or broadcast signalling). Another choice is to define the muting pattern by means of the payload bits of the "muting PDCCH" (there are roughly 25 bits available for this information).
3) It may be possible to pre-define a certain maximum pro ceasing time for UE (e.g. x sub-frames) after which the muting command becomes valid (see Figure 2). In an exemplary embodiment, x may be set to 4.
4) It may be possible to define scheduling in such a way that that there is a fixed timing relationship between the received "muting PDCCH" and the actual muting taking place at UE. This is assumed in Figure 2.
5) Another choice is to define possible starting positions for the muting via higher layers, either dedicated RRC signalling or broadcast signalling (e.g. system frame number). The possible starting positions may be also predetermined e.g. in a standard (for example, the start of a next radio frame). This choice allows increasing the reliability for the "muting PDCCH" since the same dynamic signalling may be repeated on multiple sub-frames before the start of muting (see Figure 3).

An exemplary embodiment for signalling the muting pattern from the network node (eNB) to the UEs in the serving cell may involve uplink muting based on new configuration signalling. This solution may be based on modified (RRC based) configuration signalling for a corresponding signalling type (e.g. SR or PUCCH format 2/2a/2b). The additional signalling may be needed to introduce the muting pattern on top of the existing time-domain configuration of periodic signalling (i.e. which of the transmissions needs to be muted). On the other hand, it may be possible to define a separate muting pattern which is used as a "mask" for the existing signalling. In that case, muting may be triggered e.g. by means of a logical AND operation between two muting patterns.
An example which is useful fcr understanding the invention may involve uplink muting based on MBSFN signalling. In this solution, higher layer configured uplink signals may be muted based on signalled MBSFN sub-frames. The muted uplink sub-frames are linked to MBSFN sub-frames with a predefined time offset; e.g an UL sub-frame may be muted x sub-frames after a MBSFN sub-frame with x=4 in an exemplary embodiment. This muting method may be enabled/disabled via higher layer signalling via either dedicated RRC signalling or system information.
An example which is useful for understanding the invertionmay involve uplink muting based on new broadcast signalling only. It may be possible to signal the pre-defined muting pattern as a part of broadcast signalling. It may support PRACH muting also for UEs in an idle mode.
An exemplary embodiment for signalling the muting pattern from the network node (eNB) to the UEs in the serving cell may involve muting via transmission power reduction. Typically, muting corresponds to dropping the higher-layer configured transmission, but it may also correspond to reducing transmission power according to muting pattern and a transmission power offset. This offset may be predefined e.g. in standards, or it may be higher layer signalled via either a dedicated RRC signalling or system information, or via PDCCH. Signalling may also include an indicator for the type of muting, i.e. dropping, transmission power reduction/limitation or reduction/limitation of the power spectral density of transmission power. The signalling may be cell-specific or UE-specific. For example, in the latter case, the cell-specific muting type may be set to transmission dropping but with UE-specific signaling this setting may be altered to transmission power reduction for selected, nearby UEs.
In an exemplary embodiment, a generic and flexible solution applicable to all UL muting scenarios may be provided. A more flexible controlling of the usage of radio resources may thus be provided. A time domain eICIC for HetNet, co-existence and deployment cases when refarming GSM band with LTE, and/or in-device coexistence may be provided. Necessary measurement gaps may be provided. The proposed signalling solution may be fully compatible with LTE Rel-8/9/10. The proposed signalling is capable of muting all UL signals outside of the dynamic eNB scheduler control.
It may be difficult to support uplink muting with legacy terminals. However, in an exemplary embodiment, it may possible to allocate periodic signals for legacy UEs only for the sub-frames where the uplink muting is not needed.

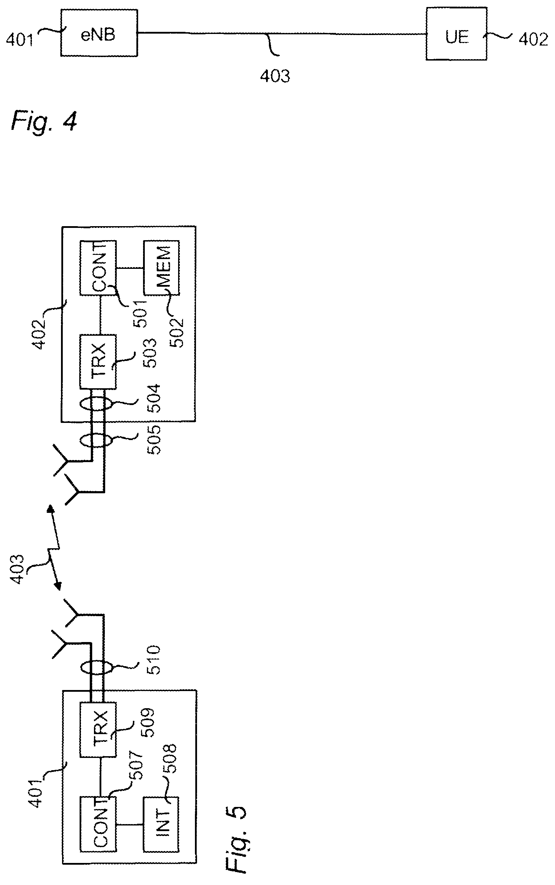

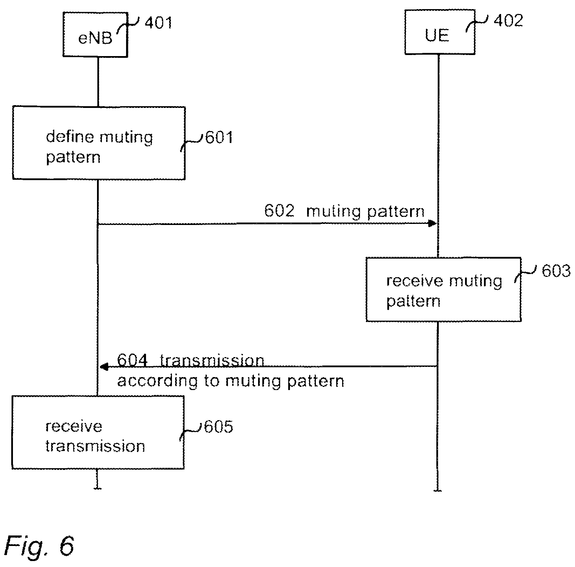

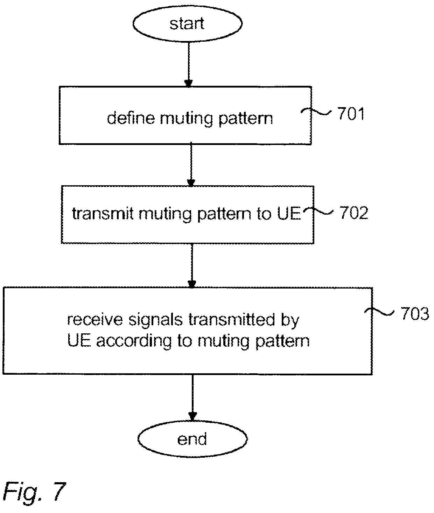

The present invention is applicable to any user terminal, server, corresponding component, and/or to any communication system or any combination of different communication systems that support access network discovery and selection functions. The communications system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.
In the following, different embodiments will be described using, as an example of a system architecture whereto the embodiments may be applied, without restricting the embodiment to such an architecture, however.
With reference to Figure 4, let us examine an example of a radio system tc which embodiments of the invention can be applied. In this example, the radio system is based on LTE network elements. However, the invention described in these examples is not limited to the LTE radio systems but can also be implemented in other radio systems, such as UMTS, GSM, EDGE, WCDMA, bluetooth network, WLAN or other mobile or wireless network. In an embodiment, the presented solution may be applied between user equipment belonging to different but compatible systems such as LTE and UMTS.
A general architecture of a communication system is illustrated in Figure 4. Figure 4 is a simplified system architecture only showing some elements and functional entities, all being logical units whose implementation may differ from what is shown . The connections shown in Figure 4 are logical connections; the actual physical connections may be different. It is apparent to a person skilled in the art that the systems also comprise other functions and structures. It should be appreciated that the functions, structures, elements, and protocols used in or for wireless communication are irrelevant to the actual invention. Therefore, they need not be discussed in more detail here.
The exemplary radio system of Figure 4 comprises a network apparatus 401 of a network operator. The network apparatus 401 may include e.g. a base station (node B, eNB) 401, access point (AP), radio network controller (RNC), MSC server (MSS), serving GPRS support node, mobility management entity (MME), home location register (HLR), home subscriber server (HSS), visitor location register (VLR) or any other network element or a combination of network elements. Figure 4 shows a user equipment 402 located in the service area of the base station 401. The base station 401 may be connected to the user equipment e.g. via a connection 403. The user equipment refers to a portable computing device, and it may also be referred to as a user terminal. Such computing devices include wireless mobile communication devices operating with or without a subscriber identification module (SIM), including, but not limited to, the following types of devices: mobile phone, smart-phone, personal digital assistant (PDA), handset, laptop computer. In the example situation of The base station 401 and the user equipment 402 are capable of connecting to each other via an access network via the connection 403.
Figure 4 only illustrates a simplified example. In practice, the net-work may include more base stations and user terminals, and more cells may be formed by the base stations. The networks of two or more operators may overlap, the sizes and form of the cells may vary from what is depicted in Figure 4, etc. The communication system may also be able to communicate with other networks, such as a public switched telephone net-work. The embodiments are not, however, restricted to the
network given above as an example, but a person skilled in the art may apply the solution to other communication networks provided with the necessary properties. For example, the connections between different network elements may be realized with internet protocol (IP) connections.
Figure 5 illustrates examples of apparatuses according to embodiments of the invention. Figure 5 shows a user equipment 402 located in the area of the base station or eNB 401. The user equipment is configured to be in connection with the base station 401. The user equipment or UE 402 comprises a controller 501 operationally connected to a memory 502 and a transceiver 503. The controller 501 controls the operation of the user equipment 402. The memory 502 is configured to store software and data. The transceiver 503 is configured to set up and maintain a wireless connection to the base station 401. The transceiver may be operationally connected to a set of antenna ports 504 connected to an antenna arrangement 505. The antenna arrangement 505 may comprise a set of antennas. The number of antennas may be one to four, for example. The number of antennas is not limited to any particular number. The user equipment 402 may also comprise various other components, such as a user interface, camera, and media player. They are not displayed in the figure due to simplicity. The base station or eNB 401 comprises a controller 507 operationally connected to an interface 508 and a transceiver 509. The controller 507 controls the operation of the base station 501. The interface 508 is configured to setup and maintain the connection with a further network element (not shown). The transceiver 509 is configured to set up and maintain a wireless connection to the user equipment 402 within the service area of the base station 401. The transceiver 509 may be operationally connected to an antenna arrangement 510. The antenna arrangement may comprise a set of antennas. The number of antennas may be two to four, for example. The number of antennas is not limited to any particular number. The base station may be operationally connected (directly or indirectly) to a further network element (not shown) of the communication system. The further network element may be a radio network controller MSC server (MSS), serving GPRS support node, mobility management entity (MME), home location register (HLR), home subscriber server (HSS), visitor location register (VLR), a radio network controller (RNC), a gateway, or a server, for example.
The embodiments are not, however, restricted to the network given above as an example, but a person skilled in the art may apply the solution to other communication networks provided with the necessary properties. For example, the connec tions between different network elements may be realized witch internet protocol (IP) connections.
The memory may include volatile and/or non-volatile memory and typically stores contend, data, or the like. For example, the memory may store computer program code such as software applications (for example for the detector unit and/or for the adjuster unit) or operating systems, information, data, content, or the like for the processor to perform steps associated with operation of the apparatus in accordance with embodiments. The memory may be, for example, random access memory (RAM), a hard drive, or other fixed data memory or storage device. Further, the memory, or part of it, may be removable memory detachably connected to the apparatus.
The techniques described herein may be implemented by various means so that an apparatus implementing one or more functions, of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firm-ware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.
User equipment may refer to any user communication device. A term "user equipment" as used herein may refer to any device having a communication capability, such as a wireless mobile terminal, a PDA, a smart phone, a personal computer (PC), a laptop computer, a desktop computer, etc. For example, the wireless communication terminal may be an UMTS or GSM/EDGE smart mobile terminal. Thus, the application capabilities of the device according to various embodiments of the invention may include native applications available in the terminal, or subsequently installed applications. The messaging service center may be implemented in any network element, such as a server.
Figure 5 is a block diagram cf an apparatus according to an embodiment of the invention. Although the apparatus has been depicted as one entity, different modules and memory may be implemented in one or more physical or logical entities.
The functionality of the network element 401 is described in more detail below with Figures 6 to 8. It should be appreciated that the apparatus 401 may comprise other units used in or for access network selection. However, they are irrelevant to the actual invention and, therefore, they need not to be discussed in more detail here.
The apparatus may also be a user terminal which is a piece of equipment or a device that associates, or is arranged to associate, the user terminal and its user with a subscription and allows a user to interact with a communications system. The user terminal presents information to the user and allows the user to input information. In other words, the user terminal may be any terminal capable of receiving information from and/or transmitting in-formation to the network, connectable to the network wirelessly or via a fixed connection. Examples of the user terminal include a personal computer, a game console, a laptop (a notebook), a personal digital assistant, a mobile station (mobile phone), and a line telephone.
The apparatus 401 may generally include a processor, controller, control unit or the like connected to a memory and to various interfaces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment.
The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firm-ware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.
The signaling chart of Figure 6 illustrates the required signalling. In the example of Figure 6, a network apparatus 401, which may comprise e.g. a base station (eNB), defines, in 601, a muting pattern regarding uplink signals that are to be temporarily muted, such that the uplink signals comprise higher layer configured uplink signals that are outside the control of a dynamic scheduler of the network apparatus. The apparatus is configured to control one or more user terminals 402 to mute said uplink signals according to said muting pattern, by signalling 602 the defined muting pattern (or at least a part of the muting pattern) to the user equipment 402 (user terminal, UE). In 603, the user terminal 402 receives the muting pattern from the apparatus 401 and applies the muting pattern by muting higher layer configured uplink signals that are outside the control of a dynamic scheduler of the network apparatus, according to the muting pattern (cr the part of the muting pattern) received from the networks apparatus. Thus the user equipment 402 is configured to transmit 604, to the apparatus 401, signalling where selected higher layer configured uplink signals have been muted by the user equipment 402 according to (the part of) the muting pattern received from the apparatus 401. In 605, the apparatus 401 is configured to receive, from the user equipment 402, signalling where selected higher layer configured uplink signals have been muted by the user equipment 402 according to the muting pattern transmitted by the apparatus 401.
It should be noted that the GSM/LTE refarming as disclosed herein is only exemplary and the present solution is not limited to these radio network technologies or networks. Instead, the present solution is applicable to any radio network technology capable of utilizing a muting pattern. Figure 7 is a flow chart illustrating an exemplary embodiment. The apparatus 401, which may comprise e.g. a base station (eNB), is configured to define, in 701, a muting pattern regarding uplink signals that are to be temporarily muted, the uplink signals comprising higher layer configured uplink signals that are outside the control of a dynamic scheduler of the network apparatus. The apparatus is configured to control one or more user terminals 402 to mute uplink signals according to said pattern, by transmitting, in 702, the defined muting pattern or a part of the pattern to the user equipment 402. In 703, the apparatus 401 is configured to receive, from the user equipment 402, signalling where selected higher layer configured uplink signals have been muted by the user equipment 402 according to (the part of) the muting pattern transmitted by the apparatus 401.

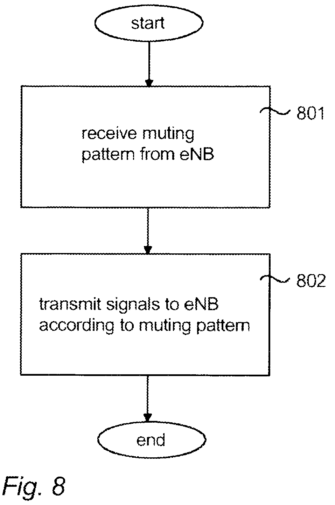

Figure 8 is a flow chart illustrating an exemplary embodiment. The user terminal (user equipment UE) 402 is configured to receive, in 801, muting pattern (or a part of the muting pattern) regarding uplink signals that are to be temporarily muted, the uplink signals comprising higher layer configured uplink signals that are outside the control of a dynamic scheduler of a network apparatus 401. The user terminal 402 and applies (the part of) the muting pattern by muting higher layer configured uplink signals that are outside the control of a dynamic scheduler of the network apparatus, According to the muting pattern received from the network apparatus. Thus the user equipment 402 is configured to transmit, in 902, to the apparatus 401, signalling where selected higher layer configured uplink signals have been muted by the user equipment 402 According to (the part of) the muting pattern received from the apparatus 401.
It will be obvious to a person skilled in the art that, as the technology advances, the inventive concept may be implemented in various ways, within the scope of the appended claims.

### List of abbreviations

- ACK: acknowledgement
- AMR: adaptive multi-rate
- CQI: channel quality indicator
- CRS: common reference signal
- CSI: channel state information
- DCI: downlink control information
- eICIC: enhanced inter-cell interference coordination
- ICIC: inter-cell interference coordination
- eNB: enhanced node B
- ETSI: European telecommunications standards institute
- GSM: global system for mobile communications
- UMTS: universal mobile telecommunications system
- EDGE: enhanced data rates for global evolution
- WCDMA: wideband code division multiple access
- WLAN: wireless local area network
- SR: scheduling request
- GPS: global positioning system
- HetNet: heterogeneous network
- ISM: industrial, scientific and medical
- LTE: long term evolution
- MBSFN: multi-media broadcast over a single frequency network
- NACK: negative ACK
- OTAC: over the air communications
- PDCCH: physical downlink control channel
- PDSCH: physical downlink shared channel
- PRACH: physical random access channel
- PUCCH: physical uplink control channel
- PUSCH: physical uplink shared channel
- O&M: operation and maintenance
- RAT: radio access technology
- RRC: radio resource control
- RRM: radio resource management
- SACCH: slow associated control channel
- TDMA: time division multiple access
- UE: user equipment
- UL: uplink
- X2: interface for interconnection of two E-UTRAN node Bs
- RAN: radio access network
- MIB: management information base
- SIB: system information block
- RNTI: radio network temporary identifier
- CRC: cyclic redundancy check

## Claims

1. A method of controlling muting of higher layer configured uplink signals, the method comprising defining, in a network apparatus, a muting pattern (601) regarding uplink signals that are to be temporarily muted, said uplink signals comprising higher layer configured uplink signals; signalling at least a part of the defined muting pattern from the network apparatus to at least one user equipment (602) in order to control the at least one user equipment to mute said uplink signals according to the signalled pattern; and triggering muting based on a specific muting physical downlink control channel including a cell-specific, user equipment specific or user equipment group specific identifier.

2. A network apparatus for controlling muting ofhigher layer configured uplink signals, wherein the apparatus is configured to
define a muting pattern (701) regarding uplink signals that are to be temporarily muted, said uplink signals comprising higher layer configured uplink signals;
signal at least a part of the defined muting pattern to at least one user equipment (702) in order to control the at least one user equipment to mute said uplink signals according to the signalled pattern; and
trigger muting based on a specific muting physical downlink control channel including a cell-specific user equipment specific or user equipment group specific identifier.

3. The apparatus according to claim 2, wherein the muting pattern is user equipment specific, cell specific, or network specific.

4. The apparatus according to claim 2 or 3, wherein the apparatus is configured to convey information related to the muting pattern to a further network apparatus.

5. The apparatus according to claim 2, 3 or 4, wherein the apparatus is configured to define the muting pattern for one or more cells, wherein the apparatus is configured to coordinate the muting pattern among multiple cells in a certain geographical area via standardized signalling with a further apparatus, or via a non-standardized operation and maintenance function O&M.

6. The apparatus according to any of claims 2 - 5, wherein the apparatus is configured to define the muting pattern to be common for multiple cells corresponding to a same network layer.

7. A user equipment for muting of higher layer configured uplink signals, wherein the user equipment is configured to
receive, from a network apparatus at least a part of a muting pattern (801) regarding uplink signals that are to be temporarily muted, said uplink signals comprising higher layer configured uplink signals;
receive, from a network apparatus, a specific muting physical downlink control channel including a cell-specific, user equipment specific or user equipment group specific identifier; and
mute higher layer configured uplink signals according to the the specific muting physical downlink control channel and the pattern received from the network apparatus (802).

8. The user equipment according to claim 7, wherein the user equipment is configured to mute said signals by dropping higher-layer configured uplink transmission according to the received pattern.

9. The user equipment according to claim 7 or 8, wherein the user equipment is configured to mute said signals by reducing transmission power for the higher-layer configured uplink transmission according to the muting pattern and according to a predefined transmission power offset.

10. The user equipment according to claim 7, 8 or 9, wherein the user equipment is configured to mute said signals in a frequency selective manner such that the muting is restricted on a selected uplink frequency portion of a system bandwidth, or such that the muting follows a frequency hopping pattern.

11. The user equipment according to any of claims 7 - 10, wherein the user equipment is configured to receive the muting pattern including the duration of the muting via higher layer signalling, said higher layer signalling comprising dedicated radio resource control signalling or broadcast signalling.

12. The user equipment according to any of claims 7 - 11, wherein the user equipment is configured to receive the muting pattern by means of payload bits of a muting physical downlink control channel.

13. The user equipment according to any of claims 7 - 12, wherein the user equipment is configured to receive a pre-definition of a maximum processing time after which the muting command becomes valid.

14. The user equipment according to any of claims 7 - 13, wherein the user equipment configured to carry out the actual muting such that that there is a fixed timing relationship between a received muting physical downlink control channel and the actual

15. The user equipment according to any of claims 7 - 14, wherein the user equipment is configured to receive possible starting positions for the muting via higher layers using dedicated radio resource control signalling or broadcast signalling.

16. A communications system comprising an apparatus for controlling muting of higher layer configured uplink signals and at least one user equipment, wherein the system is configured to
define, in the apparatus, a muting pattern (601) regarding uplink signals that are to be temporarily muted, said uplink signals comprising higher layer configured uplink signals; and signal at least a part of the defined muting pattern from the apparatus to the at least one user equipment (602) in order to control the at least one user equipment to mute said uplink signals according to the signalled pattern; and
trigger muting based on a specific muting physical downlink control channel including a cell-specific, user equipment specific or user equipment group specific identifier.

17. A computer-readable storage medium embodying a program of instructions executable by a processor to perform actions directed toward muting of higher layer configured uplink signals, the actions comprising
defining, in a network apparatus, a muting pattern (601) regarding uplink signals that are to be temporarily muted, said uplink signals comprising higher layer configured uplink; signalling at least a part of the defined muting pattern from the network apparatus to at least one user equipment (602) in order to control the at least one user equipment to mute said uplink signals according to the signalled pattern; and triggering muting based on a specific muting physical downlink control channel including a cell-specific, user equipment specific or user equipment group specific identifier.

## Patentansprüche

1. Verfahren zum Steuern des Stummschaltens von Uplink-Signalen, die auf höherer Ebene konfiguriert sind, wobei das Verfahren Folgendes umfasst:
Definieren, in einer Netzwerkeinrichtung, eines Stummschaltmusters (601) hinsichtlich der Uplink-Signale, die vorübergehend stumm geschaltet werden sollen, wobei diese Uplink-Signale auf höherer Ebene konfigurierte Uplink-Signale umfassen;
Signalisieren mindestens eines Teils des definierten Stummschaltmusters von der Netzwerkeinrichtung an mindestens eine Benutzereinrichtung (602), um die mindestens eine Benutzereinrichtung so zu steuern, dass die Uplink-Signale gemäß dem signalisierten Muster stumm geschaltet werden; und
Auslösen des Stummschaltens auf der Basis eines spezifischen stummschaltenden physikalischen Downlink-Steuerkanals, der eine zellenspezifische, benutzereinrichtungsspezifische oder benutzereinrichtungsgruppenspezifische Kennzeichnung aufweist.

2. Netzwerkeinrichtung zum Steuern des Stummschaltens von Uplink-Signalen, die auf höherer Ebene konfiguriert sind, wobei die Einrichtung dazu ausgestaltet ist,
ein Stummschaltmuster (701) hinsichtlich der Uplink-Signale zu definieren, die vorübergehend stumm geschaltet werden sollen, wobei diese Uplink-Signale auf höherer Ebene konfigurierte Uplink-Signale umfassen;
mindestens einen Teil des definierten Stummschaltmusters an mindestens eine Benutzereinrichtung (702) zu signalisieren, um die mindestens eine Benutzereinrichtung so zu steuern, dass die Uplink-Signale gemäß dem signalisierten Muster stumm geschaltet werden; und
das Stummschalten auf der Basis eines spezifischen stummschaltenden physikalischen Downlink-Steuerkanals, der eine zellenspezifische, benutzereinrichtungsspezifische oder benutzereinrichtungsgruppenspezifische Kennzeichnung aufweist, auszulösen.

3. Einrichtung nach Anspruch 2, wobei das Stummschaltmuster benutzereinrichtungsspezifisch, zellenspezifisch oder netzwerkspezifisch ist.

4. Einrichtung nach Anspruch 2 oder 3, wobei die Einrichtung dazu ausgestaltet ist, Informationen, die sich auf das Stummschaltmuster beziehen, an eine weitere Netzwerkeinrichtung zu transportieren.

5. Einrichtung nach Anspruch 2, 3 oder 4, wobei die Einrichtung dazu ausgestaltet ist, das Stummschaltmuster für eine oder mehrere Zelle/n zu definieren, wobei die Einrichtung dazu ausgestaltet ist, das Stummschaltmuster unter mehreren Zellen in einem bestimmten geografischen Gebiet über standardisierte Signalisierung mit einer weiteren Einrichtung oder über eine nicht standardisierte Betriebs- und Instandhaltungsfunktion O&M (Operation and Maintenance) zu koordinieren.

6. Einrichtung nach einem der Ansprüche 2 bis 5, wobei die Einrichtung dazu ausgestaltet ist, das Stummschaltmuster zu definieren, das für mehrere Zellen, die einer selben Netzwerkebene entsprechen, gemeinsam sein soll.

7. Benutzereinrichtung zum Stummschalten von Uplink-Signalen, die auf höherer Ebene konfiguriert sind, wobei die Benutzereinrichtung dazu ausgestaltet ist,
von einer Netzwerkeinrichtung mindestens einen Teil eines Stummschaltmusters (801) hinsichtlich der Uplink-Signale, die vorübergehend stumm geschaltet werden sollen, zu empfangen, wobei diese Uplink-Signale auf höherer Ebene konfigurierte Uplink-Signale umfassen;
von einer Netzwerkeinrichtung einen spezifischen stummschaltenden physikalischen Downlink-Steuerkanal, der eine zellenspezifische, benutzereinrichtungsspezifische oder benutzereinrichtungsgruppenspezifische Kennzeichnung aufweist, zu empfangen; und
die auf höherer Ebene konfigurierten Uplink-Signale gemäß dem spezifischen stummschaltenden physikalischen Downlink-Steuerkanal und dem Muster stumm zu schalten, das von der Netzwerkeinrichtung (802) empfangen wird.

8. Benutzereinrichtung nach Anspruch 7, wobei die Benutzereinrichtung dazu ausgestaltet ist, diese Signale durch Fallenlassen der auf höherer Ebene konfigurierten Uplink-Übertragung gemäß dem empfangenen Muster stumm zu schalten.

9. Benutzereinrichtung nach Anspruch 7 oder 8, wobei die Benutzereinrichtung dazu ausgestaltet ist, diese Signale durch Reduzieren der Übertragungsleistung für die auf höherer Ebene konfigurierte Uplink-Übertragung gemäß dem Stummschaltmuster und gemäß einem zuvor definierten Übertragungsleistungsversatz stumm zu schalten.

10. Benutzereinrichtung nach Anspruch 7, 8 oder 9, wobei die Benutzereinrichtung dazu ausgestaltet ist, diese Signale in einer frequenzselektiven Weise dergestalt stumm zu schalten, dass das Stummschalten auf einen ausgewählten Uplink-Frequenzabschnitt einer Systembandbreite beschränkt ist, oder dergestalt, dass das Stummschalten einem Frequenzspreizmuster folgt.

11. Benutzereinrichtung nach einem der Ansprüche 7 bis 10, wobei die Benutzereinrichtung dazu ausgestaltet ist, das Stummschaltmuster einschließlich der Dauer des Stummschaltens über Signalisierung auf höherer Ebene zu empfangen, wobei die Signalisierung auf höherer Ebene dedizierte Funkressourcensteuersignalisierung oder Rundsendungssignalisierung umfasst.

12. Benutzereinrichtung nach einem der Ansprüche 7 bis 11, wobei die Benutzereinrichtung dazu ausgestaltet ist, das Stummschaltmuster durch Nutzlastbits eines stummschaltenden physikalischen Downlink-Steuerkanals zu empfangen.

13. Benutzereinrichtung nach einem der Ansprüche 7 bis 12, wobei die Benutzereinrichtung dazu ausgestaltet ist, eine Vordefinition einer maximalen Verarbeitungszeit zu empfangen, nach welcher der Stummschaltbefehl gültig wird.

14. Benutzereinrichtung nach einem der Ansprüche 7 bis 13, wobei die Benutzereinrichtung dazu ausgestaltet ist, das tatsächliche Stummschalten dergestalt auszuführen, dass eine festgelegte zeitliche Beziehung zwischen einem empfangenen stummschaltenden physikalischen Downlink-Steuerkanal und dem tatsächlichen Stummschalten besteht.

15. Benutzereinrichtung nach einem der Ansprüche 7 bis 14, wobei die Benutzereinrichtung dazu ausgestaltet ist, mögliche Startpositionen für das Stummschalten über höhere Ebenen unter Verwendung dedizierter Funkressourcensteuerungssignalisierung oder Rundsendungssignalisierung zu empfangen.

16. Kommunikationssystem, umfassend eine Einrichtung zum Steuern des Stummschaltens von Uplink-Signalen, die auf höherer Ebene konfiguriert sind, und mindestens eine Benutzereinrichtung, wobei das System dazu ausgestaltet ist,
in der Einrichtung ein Stummschaltmuster (601) hinsichtlich der Uplink-Signale zu definieren, die vorübergehend stumm geschaltet werden sollen, wobei diese Uplink-Signale auf höherer Ebene konfigurierte Uplink-Signale umfassen; und
mindestens einen Teil des definierten Stummschaltmusters von der Einrichtung an die mindestens eine Benutzereinrichtung (602) zu signalisieren, um die mindestens eine Benutzereinrichtung so zu steuern, dass die Uplink-Signale gemäß dem signalisierten Muster stumm geschaltet werden; und
das Stummschalten auf der Basis eines spezifischen stummschaltenden physikalischen Downlink-Steuerkanals auszulösen, der eine zellenspezifische, benutzereinrichtungsspezifische oder benutzereinrichtungsgruppenspezifische Kennzeichnung aufweist.

17. Computerlesbares Speichermedium, ein Programm mit Anweisungen verkörpernd, die durch einen Prozessor ausgeführt werden können, um Vorgänge durchzuführen, die sich auf das Stummschalten von auf höherer Ebene konfigurierter Uplink-Signale beziehen, wobei die Vorgänge Folgendes umfassen
Definieren, in einer Netzwerkeinrichtung, eines Stummschaltmusters (601) hinsichtlich der Uplink-Signale, die vorübergehend stumm geschaltet werden sollen, wobei diese Uplink-Signale auf höherer Ebene konfigurierte Uplink-Signale umfassen;
Signalisieren mindestens eines Teils des definierten Stummschaltmusters von der Netzwerkeinrichtung an mindestens eine Benutzereinrichtung (602), um die mindestens eine Benutzereinrichtung so zu steuern, dass diese Uplink-Signale gemäß dem signalisierten Muster stumm geschaltet werden; und
Auslösen des Stummschaltens auf der Basis eines spezifischen stummschaltenden physikalischen Downlink-Steuerkanals, der eine zellenspezifische, benutzereinrichtungsspezifische oder benutzereinrichtungsgruppenspezifische Kennzeichnung aufweist.

## Revendications

1. Un procédé de commande de blocage de signaux en liaison montante configurés en couche supérieure, le procédé comprenant la définition, dans un appareil de réseau, d'un modèle de blocage (601) concernant des signaux en liaison montante qui sont destinés à être temporairement bloqués, lesdits signaux en liaison montante comprenant des signaux en liaison montante configurés en couche supérieure, le signalement d'au moins une partie du modèle de blocage défini de l'appareil de réseau à au moins un équipement d'utilisateur (602) de façon à commander le au moins un équipement d'utilisateur de bloquer lesdits signaux en liaison montante conformément au modèle signalé, et le déclenchement d'un blocage basé sur un canal de commande en liaison descendante physique de blocage spécifique comprenant un identifiant spécifique à une cellule, spécifique à un équipement d'utilisateur ou spécifique à un groupe d'équipements d'utilisateur.

2. Un appareil de réseau destiné à la commande d'un blocage de signaux en liaison montante configurés en couche supérieure, l'appareil étant configuré de façon à :
définir un modèle de blocage (701) concernant des signaux en liaison montante qui sont destinés à être temporairement bloqués, lesdits signaux en liaison montante comprenant des signaux en liaison montante configurés en couche supérieure,
signaler au moins une partie du modèle de blocage défini à au moins un équipement d'utilisateur (702) de façon à commander le au moins un équipement d'utilisateur de bloquer lesdits signaux en liaison montante conformément au modèle signalé, et
déclencher un blocage basé sur un canal de commande en liaison descendante physique de blocage spécifique comprenant un identifiant spécifique à une cellule, spécifique à un équipement d'utilisateur ou spécifique à un groupe d'équipements d'utilisateur.

3. L'appareil selon la revendication 2, dans lequel le modèle de blocage est spécifique à un équipement d'utilisateur, spécifique à une cellule ou spécifique à un réseau.

4. L'appareil selon la revendication 2 ou 3, dans lequel l'appareil est configuré de façon à acheminer des informations relatives au modèle de blocage à un autre appareil de réseau.

5. L'appareil selon la revendication 2, 3 ou 4, dans lequel l'appareil est configuré de façon à définir le modèle de blocage pour une ou plusieurs cellules, l'appareil étant configuré de façon à coordonner le modèle de blocage entre une pluralité de cellules dans une zone géographique donnée par l'intermédiaire d'un signalement standardisé avec un autre appareil ou par l'intermédiaire d'une fonction d'exploitation et de maintenance O&M non standardisée.

6. L'appareil selon l'une quelconque des revendications 2 à 5, dans lequel l'appareil est configuré de façon à définir le modèle de blocage de façon à être commun à une pluralité de cellules correspondant à une même couche de réseau.

7. Un équipement d'utilisateur destiné à un blocage de signaux en liaison montante configurés en couche supérieure, l'équipement d'utilisateur étant configuré de façon à recevoir, à partir d'un appareil de réseau, au moins une partie d'un modèle de blocage (801) concernant des signaux en liaison montante qui doivent être temporairement bloqués, lesdits signaux en liaison montante comprenant des signaux en liaison montante configurés en couche supérieure,
recevoir, à partir d'un appareil de réseau, un canal de commande en liaison descendante physique de blocage spécifique comprenant un identifiant spécifique à une cellule, spécifique à un équipement d'utilisateur ou spécifique à un groupe d'équipements d'utilisateur, et
bloquer des signaux en liaison montante configurés en couche supérieure conformément au canal de commande en liaison descendante physique de blocage spécifique et au modèle reçu de l'appareil de réseau (802).

8. L'équipement d'utilisateur selon la revendication 7, dans lequel l'équipement d'utilisateur est configuré de façon à bloquer lesdits signaux par le rejet d'une transmission en liaison montante configurée en couche supérieure conformément au modèle reçu.

9. L'équipement d'utilisateur selon la revendication 7 ou 8, dans lequel l'équipement d'utilisateur est configuré de façon à bloquer lesdits signaux par la réduction d'une puissance de transmission pour la transmission en liaison montante configurée en couche supérieure conformément au modèle de blocage et conformément à un décalage de puissance de transmission prédéfini.

10. L'équipement d'utilisateur selon la revendication 7, 8 ou 9, dans lequel l'équipement d'utilisateur est configuré de façon à bloquer lesdits signaux d'une manière sélective en fréquence de sorte que le blocage soit restreint à une partie de fréquence en liaison montante sélectionnée d'une bande passante système, ou de sorte que le blocage suive un modèle de saut de fréquence.

11. L'équipement d'utilisateur selon l'une quelconque des revendications 7 à 10, dans lequel l'équipement d'utilisateur est configuré de façon à recevoir le modèle de blocage comprenant la durée du blocage par l'intermédiaire d'une signalisation de couche supérieure, ladite signalisation de couche supérieure comprenant la signalisation d'une commande de ressource radio dédiée ou la signalisation d'une radiodiffusion.

12. L'équipement d'utilisateur selon l'une quelconque des revendications 7 à 11, dans lequel l'équipement d'utilisateur est configuré de façon à recevoir le modèle de blocage au moyen de bits de charge utile d'un canal de commande en liaison descendante physique de blocage automatique.

13. L'équipement d'utilisateur selon l'une quelconque des revendications 7 à 12, dans lequel l'équipement d'utilisateur est configuré de façon à recevoir une prédéfinition d'un temps de traitement maximal après lequel la commande de blocage devient valide.

14. L'équipement d'utilisateur selon l'une quelconque des revendications 7 à 13, dans lequel l'équipement d'utilisateur est configuré de façon à exécuter le blocage effectif de sorte qu'il existe une relation de synchronisation fixe entre un canal de commande en liaison descendante physique de blocage reçu et le blocage effectif.

15. L'équipement d'utilisateur selon l'une quelconque des revendications 7 à 14, dans lequel l'équipement d'utilisateur est configuré de façon à recevoir des positions de départ possibles pour le blocage par l'intermédiaire de couches supérieures au moyen d'une signalisation de commande de ressource radio dédiée ou d'une signalisation de radiodiffusion.

16. Un système de communication comprenant un appareil destiné à la commande d'un blocage de signaux en liaison montante configurés en couche supérieure et au moins un équipement d'utilisateur, le système étant configuré de façon à définir, dans l'appareil, un modèle de blocage (601) concernant des signaux en liaison montante qui doivent être temporairement bloqués, lesdits signaux en liaison montante comprenant des signaux configurés en couche supérieure, et
signaler au moins une partie du modèle de blocage défini de l'appareil à l'au moins un équipement d'utilisateur (602) de façon à commander le au moins un équipement d'utilisateur de bloquer lesdits signaux en liaison montante conformément au modèle signalé, et
déclencher un blocage basé sur un canal de commande en liaison descendante physique de blocage spécifique comprenant un identifiant spécifique à une cellule, spécifique à un équipement d'utilisateur ou spécifique à un groupe d'équipements d'utilisateur.

17. Un support à mémoire lisible par ordinateur incorporant un programme d'instructions exécutables par un processeur de façon à exécuter des actions dirigées vers un blocage de signaux en liaison montante configurés en couche supérieure, les actions comprenant
la définition, dans un appareil de réseau, d'un modèle de blocage (601) concernant des signaux en liaison montante qui doivent être temporairement bloqués, lesdits signaux en liaison montante comprenant une liaison montante configurée en couche supérieure, le signalement d'au moins une partie du modèle de blocage définie de l'appareil de réseau à au moins un équipement d'utilisateur (602) de façon à commander le au moins un équipement d'utilisateur de bloquer lesdits signaux en liaison montante conformément au modèle signalé, et le déclenchement d'un blocage basé sur un canal de commande en liaison descendante physique de blocage spécifique comprenant un identifiant spécifique à une cellule, spécifique à un équipement d'utilisateur ou spécifique à un groupe d'équipements d'utilisateur.
